# EUROPÄISCHE PATENTSCHRIFT

(11) **EP 2 110 613 B1**
(45) Veröffentlichungstag und Bekanntmachung des Hinweises auf die Patenterteilung: **04.04.2018**
(21) Anmeldenummer: 09005200.2
(22) Anmeldetag: 09.04.2009
(51) Int. Cl.: F24D 10/00, F24D 17/00, F24D 19/10, F24D 11/00

(54) **Verfahren und Vorrichtung zur dezentralen Warmwasserbereitung**
Method and device for decentralised water heating
Procédé et dispositif de préparation d'eau chaude décentralisée

(30) Priorität: 17.04.2008 DE 102008019186
(43) Veröffentlichungstag der Anmeldung: 21.10.2009
(73) Patentinhaber: Robert Bosch GmbH, 70442 Stuttgart (DE)
(72) Erfinder: Kosok, Jürgen, 48565 Steinfurt (DE)

(56) Entgegenhaltungen:
- WO-A1-97/36138
- DE-A1- 10 348 536
- DE-C1- 10 130 805

## Beschreibung

Die Erfindung betrifft ein Verfahren und eine Vorrichtung zur dezentralen Warmwasserbereitung nach dem Oberbegriff des Patentanspruches 1.

Besonders in Mittelmeeranrainerstaaten wird im Bereich der Mehrfamilienhäuser die dezentrale Warmwasserbereitung favorisiert. Bei dieser Technik wird Warmwasser erst in der jeweiligen Wohnung, zum Beispiel durch eine Wärmeübertragerstation, erzeugt.

Gattungsgemäße Warmwasserbereitungssysteme bestehen in der Regel aus mindestens einem insbesondere über einen Solarkreislauf zu beladenden Heizwasserspeicher und einem daran angeschlossenen Heizkreislauf mit einer Pumpe zu mindestens einer Wärmeübertragerstation sowie einer Regeleinrichtung.

Aus der DE 103 48 536 A1 geht eine Anordnung zur Erwärmung von Brauchwasser mit einer Wärmetauscheranordnung und einer Pumpenanordnung mit mehreren leistungsgestaffelten Pumpen hervor, welche über eine gemeinsame Verbindungsleitung auf einen gemeinsamen Wärmetauscher wirken und vorzugsweise am Ausgang der Primärseite des Wärmetauschers in der Rücklaufleitung angeordnet sind.

Eine allgemein bekannte, beispielsweise einer Wohnung zugeordnete Wärmeübertragerstation besteht aus einem Plattenwärmetauscher mit einem primärseitigen Anschluss an einen Heizkreislauf, einem Kaltwasseranschluss und einem Warmwasseranschluss zu einem Verbraucher auf der Sekundärseite sowie einem Proportionalregler zur Einstellung der primärseitigen Heizwassermenge auf die sekundärseitig erfasste Warmwasserverbrauchsmenge.

Generell kommt es beim Einsatz von solarthermischen Anlagen für die Warmwasserbereitung auf eine niedrige Rücklauftemperatur aus einem Heizkreislauf an, die dem Speicher zugeführt werden kann. Denn das Niveau der Rücklauftemperatur ist entscheidend für die Effektivität eines solarthermischen Systems.

Werden die Kaltwasseranschlussleitungen in frostfreien Gegenden oberirdisch oder außen an Gebäuden verlegt, beispielsweise um damit Kosten zu sparen, kommt es bei einer Betrachtung über einen längeren Zeitraum zu starken Schwankungen der Kaltwassertemperatur. So kann die Kaltwassertemperatur im Winter zum Beispiel bei nur 10°C und im Sommer bei 30°C liegen. Bei einer bekannten, starren Vorlauftemperatur-Regelung würde somit die Rücklauftemperatur des Heizkreislaufes unnötig hohe Werte annehmen, so dass damit der Eintrag solarer Wärme in das Speichervolumen reduziert würde, weil sich auch der untere Bereich des Heizwasserspeichers, wo sich der Wärmetauscher für den Solarkreislauf befindet, relativ stark aufheizt.

Der Erfindung liegt daher die Aufgabe zu Grunde, für dezentrale Warmwasserbereitungsanlagen die Regelung der Vorlauftemperatur unter Berücksichtigung einer stark schwankenden Kaltwassertemperatur zu optimieren und im Zusammenhang mit Solaranlagen eine Stagnation zu vermeiden.

Erfindungsgemäß wird dies mit den Merkmalen des Patentanspruches 1 gelöst. Vorteilhafte Weiterbildungen sind den Unteransprüchen zu entnehmen.

Das Verfahren zur dezentralen Warmwasserbereitung ist dadurch gekennzeichnet, dass der Wärmetauscher ein Plattenwärmetauscher ist, dass der Heizkreislauf einen Proportionalregler zur Einstellung der primärseitigen Heizwassermenge auf die sekundärseitig erfasste Warmwasserverbrauchsmenge hat und dass zusätzlich die Kaltwassertemperatur und die Heizwassertemperatur im Heizwasserspeicher im Heizkreislauf gemessen, ausgewertet und in der Regeleinrichtung zu einem Stellsignal für den Mischer verarbeitet werden. Dabei wird die Kaltwassertemperatur an einer zentralen Stelle in der Kaltwasseranschlussleitung zu mindestens einer Wärmeübertragerstation erfasst.

Mit steigender Kaltwassertemperatur wird die Vorlauftemperatur im Heizkreislauf abgesenkt und bei fallender Kaltwassertemperatur erhöht. Unabhängig davon wird die Vorlauftemperatur im Heizkreislauf auch angehoben, wenn im Heizwasserspeicher die Temperaturen über einem vorgebbaren Schwellwert vorliegen. Dies ist dann der Fall, wenn im Solarkreislauf eine Stagnation aufgetreten ist und/oder dort relativ hohe Temperaturen vorliegen, welche zu einer Stagnation führen können.

Die Vorrichtung zur Durchführung des Verfahrens ist dadurch gekennzeichnet, dass in die Vorlaufleitung des Heizkreislaufes ein Mischer eingebaut ist ein Temperaturfühler zur Messung der Heizwassertemperatur im Heizwasserspeicher vorgesehen ist, dass ein Temperaturfühler zur Messung der Kaltwassertemperatur an einer zentralen Stelle in der Kaltwasseranschlussleitung der zumindest einen Wärmeübertragerstation vorgesehen ist, dass der Wärmetauscher ein Plattenwärmetauscher ist, dass der Heizkreislauf einen Proportionalregler zur Einstellung der primärseitigen Heizwassermenge auf die sekundärseitig erfasste Warmwasserverbrauchsmenge hat, dass der Temperaturfühler zur Messung der Kaltwassertemperatur und der Temperaturfühler zur Messung der Heizwassertemperatur dazu eingerichtet sind, jeweils die Kaltwassertemperatur und die Heizwassertemperatur im Heizwasserspeicher zu messen, und dass die Regeleinrichtung dazu eingerichtet ist, diese beiden Temperaturen auch auszuwerten und zu einem Stellsignal für einen Mischer zu verarbeiten. In die Vorlaufleitung des Heizkreislaufes ist der Mischer eingebaut. Nach dem Mischer ist ein Temperaturfühler zur Messung der Vorlauftemperatur im Heizkreislauf vorgesehen und ein Temperaturfühler erfasst die Heizwassertemperatur im Heizwasserspeicher. Weiterhin ist ein Temperaturfühler zur Messung der Kaltwassertemperatur an einer zentralen Stelle in der Kaltwasseranschlussleitung zu mindestens einer Wärmeübertragerstation vorgesehen.

Mit der Erfindung steht ein einfaches Verfahren und eine einfache Vorrichtung zur dezentralen Warmwasserbereitung zur Verfügung, mit dem insbesondere in Verbindung mit einem solar beheizten Speicher die Warmwasserbereitung optimiert wird. Es wird bei dezentralen Warmwasserbereitungsanlagen die Regelung der Vorlauftemperatur unter Berücksichtigung einer stark schwankenden Kaltwassertemperatur optimiert.

Mit einer geregelten Vorlauftemperatur, welche die Kaltwassertemperatur berücksichtigt, ergeben sich folgende bedeutende Vorteile. Erstens kann die Rücklauftemperatur abgesenkt und damit die Effektivität des dezentralen Warmwasserbereitungssystems erhöht werden. Die Wärmeverluste in der Verteilleitung in einem solchen System wurden nämlich als ganz erheblich identifiziert. Mit der erfindungsgemäßen Begrenzung der Vorlauftemperatur in Abhängigkeit von der Kaltwassertemperatur reduzieren sich somit die Verluste im Verteilsystem. Zweitens kann die Kaltwassertemperatur an einer zentralen Stelle erfasst werden, so dass es nicht notwendig ist, jeder Wärmeübertragerstation in einer Wohnung diese Funktion zuzuordnen. Die Kosten für das Gesamtsystem reduzieren sich dadurch. Drittens ist das mögliche Problem deutlich reduziert, dass sich das System durch nacheinander geschaltete und sich gegenseitig beeinflussende Regler aufschwingt.

Weiterhin bietet die Erfindung Vorteile im Hinblick auf einen wirksamen Stagnationsschutz für solarthermische Systeme. In den Einsatzgebieten treten oftmals zeitweise, in Abhängigkeit von der Nutzungsart der Gebäude, geringe Wärmeverbrauchswerte auf, welche hohen solaren Strahlungswerten gegenüber stehen. Diese Situation liegt zum Beispiel dann vor, wenn Wohngebäude überwiegend an den Wochenenden genutzt werden. Um bei solarthermischen Systemen eine Stagnation zu vermeiden, ist erfindungsgemäß eine Erhöhung der Vorlauftemperaturen in den Zeiten möglich, in denen die Temperaturen im Heizwasserspeicher vorgebbare obere Grenzwerte erreichen oder überschreiten. Dann könnte die Vorlauftemperatur bis auf ein vorgebbares Niveau angehoben werden. In diesem Fall liegt ein ausreichender Wärmeeintrag vor, wobei Verluste in den Verteilleitungen angehoben werden, aber in dieser Betriebssituation keine Rolle spielen. Wesentlich ist, dass die Stagnationsphase zumindest reduziert werden kann.

Insgesamt ist der Systemaufbau einfach, denn das Warmwasserbereitungssystem kommt erfindungsgemäß mit einer geringen Anzahl von Bauteilen und Sensoren aus. Dadurch wird eine hohe Robustheit erreicht. Zudem können alle Bauteile in einer werksseitig vormontierten Einheit untergebracht werden, welche dann in der Nähe des Heizwasserspeichers montiert werden kann und im Wesentlichen Regeleinrichtung, Mischer, Pumpe und Vorlauftemperaturfühler umfasst. Damit ist die erfinderische Lösung auch für den Nachrüstfall geeignet.

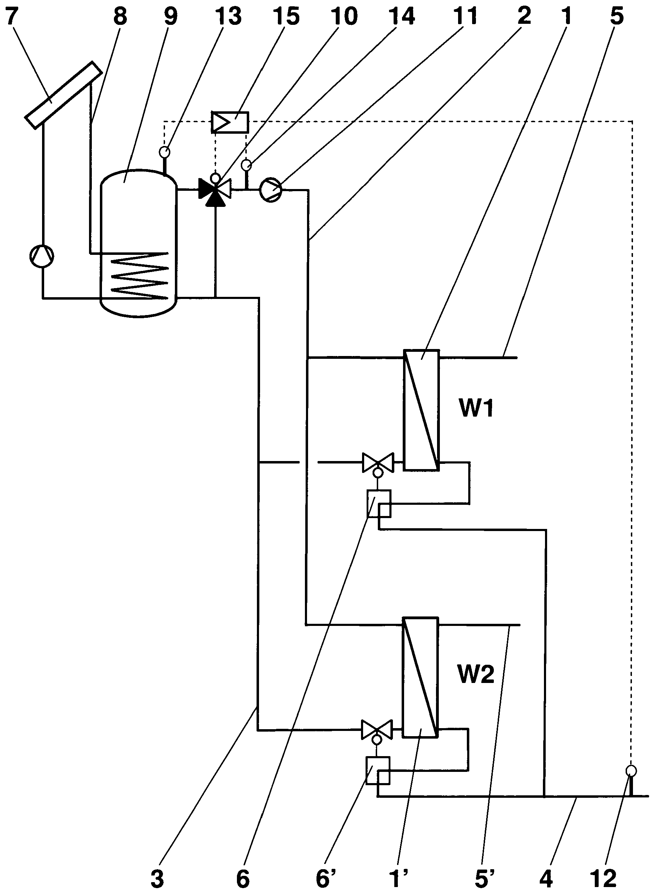

Die Zeichnung stellt ein Ausführungsbeispiel der Erfindung dar und zeigt in einer einzigen Figur den schematischen Aufbau eines dezentralen Warmwasserbereitungssystems.

Das dargestellte System zur dezentralen Warmwasserbereitung besitzt zwei Wärmeübertragerstationen W1, W2. Diese bestehen jeweils aus einem Plattenwärmetauscher 1,1' mit primärseitigem Anschluss an einen Heizkreislauf mit Vor- und Rücklaufleitung 2 ,3, einem Kaltwasseranschluss 4 und einem Warmwasseranschluss 5 zu einem Verbraucher auf der Sekundärseite sowie einem Proportionalregler 6, 6' zur Einstellung der primärseitigen Heizwassermenge auf die sekundärseitig erfasste Warmwasserverbrauchsmenge.

Über einen durch mindestens einen Sonnenkollektor 7 geführten Solarkreislauf 8 wird ein Heizwasserspeicher 9 beladen, an den der Heizkreislauf mit einem nachgeschalteten Mischer 10 und einer Pumpe 11 angeschlossen ist.

Die Vorlauftemperatur im Heizkreislauf wird über den Mischer 10 geregelt, indem die Kaltwassertemperatur mit einem zentral angeordneten Temperaturfühler 12, die Heizwassertemperatur mit einem Temperaturfühler 13 im Heizwasserspeicher 9 und die Vorlauftemperatur mit einem Temperaturfühler 14 in der Vorlaufleitung 2 gemessen wird. Diese Messwerte werden in der Regeleinrichtung 15 ausgewertet und zu einem Stellsignal für den Mischer 10 verarbeitet.

## Patentansprüche

1. Verfahren zur dezentralen Warmwasserbereitung über mindestens eine Wärmeübertragerstation (W1, W2), bestehend aus einem Wärmetauscher mit primärseitigem Anschluss an einen Heizkreislauf mit Vor- und Rücklaufleitung (2, 3), einem Kaltwasseranschluss (4) und einem Warmwasseranschluss (5, 5') zu einem Verbraucher auf der Sekundärseite, mit einem insbesondere über einen Solarkreislauf (8) zu beladenden Heizwasserspeicher (9), an den der Heizkreislauf mit einer Pumpe (11) angeschlossen ist, sowie mit einer Regeleinrichtung (15), die dazu eingerichtet ist, eine Vorlauftemperatur im Heizkreislauf auszuwerten und zu einem Stellsignal für einen Mischer (10) zu verarbeiten,
wobei die Vorlauftemperatur im Heizkreislauf über den Mischer (10) geregelt wird,
**dadurch gekennzeichnet, dass**
der Wärmetauscher ein Plattenwärmetauscher ist,
dass der Heizkreislauf einen Proportionalregler (6, 6') zur Einstellung der primärseitigen Heizwassermenge auf die sekundärseitig erfasste Warmwasserverbrauchsmenge hat und dass zusätzlich die Kaltwassertemperatur und, die Heizwassertemperatur im Heizwasserspeicher (9) im Heizkreislauf gemessen, ausgewertet und in der Regeleinrichtung (15) zu einem Stellsignal für den Mischer (10) verarbeitet werden.

2. Verfahren nach Anspruch 1,
**dadurch gekennzeichnet, dass** die Kaltwassertemperatur an einer zentralen Stelle in der Kaltwasseranschlussleitung (4) zu mindestens einer Wärmeübertragerstation (W1, W2) erfasst wird.

3. Verfahren nach Anspruch 1 oder 2,
**dadurch gekennzeichnet, dass** die Vorlauftemperatur im Heizkreislauf mit steigender Kaltwassertemperatur abgesenkt wird.

4. Verfahren nach einem der Ansprüche 1 bis 3,
**dadurch gekennzeichnet, dass** die Vorlauftemperatur im Heizkreislauf mit fallender Kaltwassertemperatur erhöht wird.

5. Verfahren nach einem der Ansprüche 1 bis 4,
**dadurch gekennzeichnet, dass** die Vorlauftemperatur im Heizkreislauf angehoben wird, wenn im Heizwasserspeicher (9) Temperaturen über einem vorgebbaren Schwellwert vorliegen und somit im Solarkreislauf (8) eine Stagnation aufgetreten ist und/oder dort relativ hohe Temperaturen vorliegen, welche zu einer Stagnation führen können.

6. Vorrichtung mit einer Wärmeübertragerstation (W1, W2), bestehend aus einem Wärmetauscher (1, 1') mit primärseitigem Anschluss an einen Heizkreislauf mit Vor- und Rücklaufleitung (2, 3), einem Kaltwasseranschluss (4) und einem Warmwasseranschluss (5, 5') zu einem Verbraucher auf der Sekundärseite, mit einem insbesondere über einen Solarkreislauf (8) zu beladenden Heizwasserspeicher (9), an den der Heizkreislauf mit einer Pumpe (11) angeschlossen ist, sowie mit einer Regeleinrichtung (15),
wobei in die Vorlaufleitung (2) des Heizkreislaufes ein Mischer (10) eingebaut ist,
wobei nach dem Mischer (10) einem Temperaturfühler (14) zur Messung der Vorlauftemperatur im Heizkreislauf vorgesehen ist,
wobei die Regeleinrichtung (15) dazu eingerichtet ist, diese Temperatur auszuwerten und zu einem Stellsignal für den Mischer (10) zu verarbeiten,
wobei die Vorlauftemperatur im Heizkreislauf über den Mischer (10) geregelt wird,
**dadurch gekennzeichnet, dass**
ein Temperaturfühler (13) zur Messung der Heizwassertemperatur im Heizwasserspeicher (9) vorgesehen ist,
dass ein Temperaturfühler (12) zur Messung der Kaltwassertemperatur an einer zentralen Stelle in der Kaltwasseranschlussleitung (4) der zumindest einen Wärmeübertragerstation (W1, W2) vorgesehen ist,
dass der Wärmetauscher ein Plattenwärmetauscher ist,
dass der Heizkreislauf einen Proportionalregler (6, 6') zur Einstellung der primärseitigen Heizwassermenge auf die sekundärseitig erfasste Warmwasserverbrauchsmenge hat,
dass der Temperaturfühler (12) zur Messung der Kaltwassertemperatur und der Temperaturfühler (13) zur Messung der Heizwassertemperatur dazu eingerichtet sind, jeweils die Kaltwassertemperatur und die Heizwassertemperatur im Heizwasserspeicher (9) zu messen,
und dass die Regeleinrichtung (15) dazu eingerichtet ist, diese beiden Temperaturen auch auszuwerten und zu einem Stellsignal für einen Mischer (10) zu verarbeiten.

## Claims

1. Method for decentralised water heating via at least one heat transfer station (W1, W2), comprising a heat exchanger with primary-side connection to a heating circuit with flow and return line (2, 3), a cold water connection (4) and a warm water connection (5, 5') to a consumer on the secondary side, having a hot water reservoir (9) to be charged in particular via a solar circuit (8) and to which the heating circuit is connected by a pump (11), and having a control apparatus (15) which is configured to evaluate a flow temperature in the heating circuit and to process it to form an actuating signal for a mixer (10),
the flow temperature in the heating circuit being regulated via the mixer (10),
**characterized**
**in that** the heat exchanger is a plate heat exchanger,
**in that** the heating circuit has a proportional controller (6, 6') for setting the primary-side hot water volume to the warm water consumed volume recorded on the secondary side,
and **in that** in addition the cold water temperature and the hot water temperature in the hot water reservoir (9) in the heating circuit are measured, evaluated and processed in the control apparatus (15) to form an actuating signal for the mixer (10) .

2. Method according to Claim 1,
**characterized in that** the cold water temperature is recorded at a central point in the cold water connecting line (4) to at least one heat transfer station (W1, W2).

3. Method according to Claim 1 or 2,
**characterized in that** the flow temperature in the heating circuit is lowered as the cold water temperature rises.

4. Method according to one of Claims 1 to 3,
**characterized in that** the flow temperature in the heating circuit is increased as the cold water temperature falls.

5. Method according to one of Claims 1 to 4,
**characterized in that** the flow temperature in the heating circuit is raised if there are temperatures above a predefinable threshold value in the hot water reservoir (9) and thus stagnation has occurred in the solar circuit (8), and/or there are relatively high temperatures there which could lead to stagnation.

6. Device having a heat transfer station (W1, W2) comprising a heat exchanger (1, 1') with primary-side connection to 2 heating circuit with flow and return line (2, 3), a cold water connection (4) and a warm water connection (5, 5') to a consumer on the secondary side, having a hot water reservoir (9) to be charged in particular via a solar circuit (8) and to which the heating circuit is connected via a pump (11), and having a control apparatus (15),
a mixer (10) being incorporated in the flow line (2) of the heating circuit,
a temperature sensor (14) for measuring the flow temperature in the heating circuit being provided downstream of the mixer (10),
the control apparatus (15) being configured to evaluate this temperature and to process it to form an actuating signal for the mixer (10),
the flow temperature in the heating circuit being regulated via the mixer (10),
**characterized**
**in that** a temperature sensor (13) for measuring the hot water temperature in the hot water reservoir (9) is provided,
**in that** a temperature sensor (12) for measuring the cold water temperature is provided at a central point in the cold water connecting line (4) of the at least one heat transfer station (W1, W2),
**in that** the heat exchanger is a plate heat exchanger,
**in that** the heating circuit has a proportional controller (6, 6') for setting the primary-side hot water volume to the warm water consumed volume recorded on the secondary side,
**in that** the temperature sensor (12) for measuring the cold water temperature and the temperature sensor (13) for measuring the hot water temperature are configured to measure the cold water temperature and the hot water temperature in the hot water reservoir (9), respectively,
and **in that** the control apparatus (15) is configured also to evaluate these two temperatures and to process them to form an actuating signal for a mixer (10).

## Revendications

1. Procédé de traitement décentralisé d'eau chaude par au moins un poste (W1, W2) de transfert de chaleur constitué d'un échangeur de chaleur doté d'un raccordement primaire à un circuit de chauffage présentant un conduit de départ et un conduit de retour (2, 3), d'un raccordement (4) à l'eau froide et d'un raccordement (5, 5') à l'eau chaude pour un consommateur situé sur le côté secondaire, d'une réserve (9) d'eau chaude à charger en particulier par un circuit solaire (8) et à laquelle le circuit de chauffage est raccordé par une pompe (11), ainsi que d'un dispositif de régulation (15) conçu pour évaluer la température de départ du circuit de chauffage et la transformer en un signal de réglage d'un mélangeur (10), la température de départ du circuit de chauffage étant régulée par l'intermédiaire du mélangeur (10),
**caractérisé en ce que**
l'échangeur de chaleur est un échangeur de chaleur à plaques,
**en ce que** le circuit de chauffage possède un régulateur proportionnel (6, 6') qui régule le débit de l'eau de chauffage du côté primaire selon le débit de consommation d'eau chaude saisi sur le côté secondaire et
**en ce qu'**en plus de la température de l'eau froide, la température de l'eau chaude présente dans la réserve (9) d'eau chaude du circuit de chauffage est mesurée, évaluée et transformée dans le dispositif de régulation (15) en un signal de réglage du mélangeur (10) .

2. Procédé selon la revendication 1, **caractérisé en ce que** la température de l'eau froide est saisie en un emplacement central dans le conduit (4) de raccordement d'eau froide qui conduit au moins à un poste (W1, W2) de transfert de chaleur.

3. Procédé selon les revendications 1 ou 2, **caractérisé en ce que** la température de départ du circuit de chauffage est abaissée lorsque la température de l'eau froide augmente.

4. Procédé selon l'une des revendications 1 à 3, **caractérisé en ce que** la température de départ du circuit de chauffage est augmentée lorsque la température de l'eau froide diminue.

5. Procédé selon l'une des revendications 1 à 4, **caractérisé en ce que** la température de départ du circuit de chauffage est augmentée si les températures dans la réserve (9) d'eau chaude sont supérieures à une valeur de seuil prédéterminée et qu'ainsi une stagnation est survenue dans le circuit solaire (8) et/ou des températures relativement élevées qui peuvent conduire à une stagnation y prévalent.

6. Ensemble doté d'un poste (W1, W2) de transfert de chaleur constitué d'un échangeur de chaleur (1, 1') doté d'un raccordement primaire à un circuit de chauffage présentant un conduit de départ et un conduit de retour (2, 3), d'un raccordement (4) à l'eau froide et d'un raccordement (5, 5') à l'eau chaude pour un consommateur situé sur le côté secondaire, d'une réserve (9) d'eau chaude à charger en particulier par un circuit solaire (8) et à laquelle le circuit de chauffage est raccordé par une pompe (11), ainsi que d'un dispositif de régulation (15) conçu pour évaluer la température de départ du circuit de chauffage et la transformer en un signal de réglage d'un mélangeur (10), un mélangeur (10) étant incorporé dans le conduit de départ (2) du circuit de chauffage,
une sonde de température (14) étant prévue en aval du mélangeur (10) pour mesurer la température de départ du
le dispositif de régulation (15) étant conçu pour évaluer cette température et la transformer en un signal de réglage du mélangeur (10),
la température de départ du circuit de chauffage étant régulée par l'intermédiaire du mélangeur (10), **caractérisé en ce que**
une sonde de température (13) est prévue pour mesurer la température de l'eau chaude dans la réserve (9) d'eau chaude,
**en ce qu'**une sonde de température (12) est prévue pour mesurer la température de l'eau froide en un emplacement central du conduit (4) de raccordement d'eau froide du ou des postes (W1, W2) de transfert de chaleur,
**en ce que** l'échangeur de chaleur est un échangeur de chaleur à plaques,
**en ce que** le circuit de chauffage possède un régulateur (6, 6') qui régule le débit d'eau de chauffage du côté primaire selon le débit de consommation d'eau chaude saisi sur le côté secondaire, **en ce que** la sonde de température (12) qui mesure la température de l'eau froide et la sonde de température (13) qui mesure la température de l'eau chaude sont conçues pour mesurer la température de l'eau froide et la température de l'eau chaude dans la réserve (9) d'eau de chauffage et
**en ce que** le dispositif de régulation (15) est conçu pour également évaluer ces deux températures et les transformer en un signal de réglage du mélangeur (10) .
